(19) Europäisches Patentamt
European Patent Office
Office européen des brevets

(11) **EP 2 207 027 B1**

(12) **EUROPÄISCHE PATENTSCHRIFT**

(45) Veröffentlichungstag und Bekanntmachung des Hinweises auf die Patenterteilung:
**26.08.2015 Patentblatt 2015/35**

(21) Anmeldenummer: **10000062.9**

(22) Anmeldetag: **07.01.2010**

(51) Int Cl.:
*G01N 22/00* (2006.01)    *G01N 22/04* (2006.01)
*B65B 57/10* (2006.01)    *A24D 3/02* (2006.01)

(54) **Verfahren und Vorrichtung zur Messung der Feuchte von Kapseln in einem Zigarettenfilterstrang, indem dieser durch einen Mikrowellenresonator geführt wird**

Method and device for measuring the humidity of capsules in a cigarette filter rod by transporting the filter rod through a microwave resonator

Procédé et dispositif de mesure de l'humidité des capsules dans une tige de filtre à cigarettes en transportant la tige de filtre à travers un résonateur à micro-ondes

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.01.2009 DE 102009004457**

(43) Veröffentlichungstag der Anmeldung:
**14.07.2010 Patentblatt 2010/28**

(73) Patentinhaber: **TEWS Elektronik GmbH & Co. KG**
**22459 Hamburg (DE)**

(72) Erfinder:
 • **Herrmann, Rainer**
 **20253 Hamburg (DE)**
 • **Schlemm, Udo**
 **20259 Hamburg (DE)**
 • **Zaage, Stefan**
 **30655 Hannover (DE)**
 • **Ceslik, Harald**
 **22459 Hamburg (DE)**

(74) Vertreter: **Hauck Patentanwaltspartnerschaft mbB**
**Postfach 11 31 53**
**20431 Hamburg (DE)**

(56) Entgegenhaltungen:
**EP-A1- 1 467 191    EP-A1- 1 623 925**
**EP-A1- 2 238 847    EP-A1- 2 243 384**
**EP-A2- 2 243 385    WO-A1-2010/003899**
**WO-A2-2009/099793    CH-A5- 648 733**
**DE-A1- 10 159 233    GB-A- 1 095 848**
**US-A1- 2007 068 540    US-B1- 6 647 702**

 • **TEWS: "Feuchtemessung mit der Mikrowellen-Resonanz-Technik" Seiten 1-22, XP002586164 Gefunden im Internet: URL:http://www.kundert-ing.ch/display.cfm/ id/101618/disp_type/display/ filename/Tews_ Uebersichtsbroschuere.pdf> [gefunden am 2010-06-07]**

EP 2 207 027 B1

**Beschreibung**

Die vorliegende Erfindung betrifft ein Verfahren und eine Vorrichtung zur Messung der Feuchte bei einer Vielzahl von portionierten Einheiten in einem Trägermaterial.

Aus EP 0 889 321 ist ein Mikrowellenresonator bekannt, der als ein Hohlraumresonator ausgebildet ist, um an einer Probe ein Dichte- und/oder Feuchteprofil in Längsrichtung der Probe zu messen. Der bekannte Mikrowellenresonator besitzt einen zylindrischen Hohlraum, durch den die zu messende Probe hindurchbewegt wird und dessen Veränderungen der Resonanz gegenüber dem Leerzustand eindeutige Rückschlüsse auf die Feuchte- und Dichteprofilwerte der Probe ermöglichen.

Aus EP 1 316 630 ist eine Vorrichtung und ein Verfahren zur Erfassung der Masse und des Feuchtegehalts von Fasermaterial in einer Spinnereivorbereitungsmaschine bekannt. Das zu messende Material wird hierbei durch einen Hohlraumresonator geführt und die auftretenden Änderungen der Resonanzeigenschaften des Mikrowellenresonators gegenüber dem Leerzustand des Resonators aufgezeichnet. Ferner wird die Geschwindigkeit des durchlaufenden Materials gemessen.

Aus EP 1 467 191 B1 ist ein Verfahren und eine Vorrichtung zur Bestimmung der Masse von portionierten Wirkstoffeinheiten, wie beispielsweise Kapseln, Tabletten und Dragees bekannt. Um Kapseln, deren Masse nicht innerhalb eines vorgegebenen Toleranzbereichs liegt am Ausgang einer Maschine zur Befüllung der Kapseln auszusortieren, ist vorgesehen, die Kapseln innerhalb eines Luftstroms durch den Mikrowellenresonator zu transportieren. Über entsprechende Weichen oder Luftimpulse wird eine Sortierung der Kapseln nach unterschiedlichen Massen und Feuchten in unterschiedliche Behälter vorgenommen, wobei die Mikrowellenresonatormesseinheit entweder zusammen mit dem Auswurfmechanismus in der Maschine selbst integriert oder aber als eigenständige Einheit neben der Maschine positioniert ist.

Aus DE 101 59 233 A1 ist ein Verfahren zu Herstellung von Filtern für Filterzigaretten bekannt geworden, bei dem Filtergranulat vor einer Strangformvorrichtung taktweise zonenweise aufgetragen wird und mit Hilfe eines Mikrowellenresonators eine Erfassung der Übergänge von granulatfreien zu granulatbehafteten Zonen erfolgt.

Aus der Firmenschrift Tews Elektronik "Feuchternmessung mit der Mikrowellen-Resonanz-Technik" ist bekannt, ein Mikrowellenhochgeschwindigkeitsinesssystem vorzusehen, das die Gewichts- und Füllmengenmessung bei hohen Geschwindigkeiten, beispielsweise bei Gelantinekapseln, durchführen kann.

Der Erfindung liegt die Aufgabe zugrunde, ein Verfahren und eine Vorrichtung zur Messung der Feuchte bei portionierten Einheiten in einem nichtmetallischen Trägermaterial bereitzustellen, die mit einfachen Mitteln zuverlässig die portionierte Einheit unabhängig von deren Trägermaterial misst.

Erfindungsgemäß wird die Aufgabe durch ein Verfahren mit den Merkmalen nach Anspruch 1 und durch eine Vorrichtung mit den Merkmalen aus Anspruch 4 gelöst. Vorteilhafte Ausgestaltungen des Verfahrens bilden den Gegenstand der Unteransprüche.

Bei dem erfindungsgemäßen Verfahren erfolgt eine Messung der Feuchte bei einer Vielzahl von portionierten Einheiten in einem nichtmetallischen Trägermaterial, das auch inhomogen ausgebunden sein kann. Erfindungsgemäß ist als Trägermaterial ein Zigarettenfilterstrang vorgesehen, der mit Kapseln dotiert ist. Das Verfahren verwendet ein Mikrowellenmessgerät, das aus mindestens einem Mikrowellenresonator zur Erzeugung mindestens einer Resonanzmode in einem räumlichen Messbereich und einer Auswerteeinheit zur Auswertung von mindestens einer Größe jeder Resonanzmode bescht. Ferner schließt das erfindungsgemäße Verfahren eine Fördereinrichtung für das Trägermaterial ein, die das Trägermaterial zusammen mit der portionierten Einheit durch den Messbereich des mindestens einen Mikrowellenresonators transportiert. Erfindungsgemäß misst das Mikrowellenmessgerät die mindestens zwei Größen der mindestens einen Resonanzmode jeweils, wenn keine portionierte Einheit sich in dem räumlichen Messbereich befindet und zusätzlich, wenn die portionierte Einheit sich mindestens teilweise in dem Messbereich befindet. Wobei jeweils insgesamt mindestens zwei Größen gemessen werden, d.h. im Falle einer Resonanzmode werden für diese zwei Größen gemessen, im Falle mehrer Resonanzmoden können in mindestens einer Resonanzmode eine oder mehrere Größen erfasst werden. Die Auswerteeinheit subtrahiert die für das Trägermaterial gemessenen Größen von den entsprechenden Messwerten, die gemessen werden, wenn die portionierte Einheit sich mindestens teilweise in dem räumlichen Messbereich befindet. Diese Substraktion macht nicht nur die Erfassung der Eigenschaften der portionierten Einheit möglich, sondern liefert ein Messsignal, das unabhängig von temperaturbedingten Formveränderungen, von Verschmutzungs- oder Abnutzungserscheinungen am Resonator ist. Auf diese Weise können Messungen von Leerresonanzzuständen, die normalerweise zur Erfassung solcher Störparameter erforderlich sind, entfallen. Die Auswerteeinheit bestimmt aus den Differenzen über ein Kennfeld einen Wert für die Feuchte der portionierten Einheit. Je nach der geometrischen Abmessung der portionierten Einheiten kann bei dem erfindungsgemäßen Verfahren auch über das Kennfeld die Dichte der portionierten Einheit gemessen werden, wenn die geometrischen Abmessungen der portionierten Einheiten sich nicht ändern. Das Kennfeld zu einer Messgröße wie Masse, Dichte oder Feuchte gibt den Wert der Messgröße abhängig von mindestens zwei Differenzen an, die von der Auswerteeinheit bestimmt wurden.

Dem erfindungsgemäßen Verfahren liegt die Erkenntnis zugrunde, dass die Resonanzeffekte der portionierten Einheiten sich mit denen des Trägermaterials unabhängig superponieren und somit gemeinsam gemessen und wieder in Einzelbestandteile zerlegt werden können. Um den Effekt des Trägermaterials, dessen Eigenschaften inhomogen sein können, aus dem Messergebnis herauszurechnen, wird bei dem erfindungsgemäßen Verfahren eine Differenzbildung durchgeführt. Das erfindungsgemäße Verfahren misst die lokalen Eigenschaften des Trägermaterials nur dann, wenn sich im Messbereich nur das Trägermaterial befindet. Befindet sich die portionierte Einheit mindestens teilweise mit in dem Messbereich, so werden die von dem Mikrowellenmessgerät erfassten Änderungen in der Resonanzcharakteristik der Resonanzmode um die nur für das Trägermaterial erfassten Änderungen der Resonanzcharacteristik korrigiert. Es hat sich bei dem erfindungsgemäßen Verfahren herausgestellt, dass auf diese Weise sehr zuverlässig die Eigenschaften der portionierten Einheiten erfasst werden können und zugleich Schwankungen im Trägermaterial, Temperaturänderungen und andere Einflüsse, die während der Durchführung des Verfahrens auftreten, zuverlässig kompensiert werden können. Entscheidende Bedingung dafür ist, dass das Mikrowellenmessfeld so ausgebildet ist, dass zwischen zwei in die Trägerbahn eingebettete portionierte Einheiten immer das Trägermaterial selbst, ohne Einfluss der portionierten Einheiten vermessen werden kann. Die reine Trägermaterial-Messung bildet somit eine Referenzgröße, die die Leerresonanzmessung, deren Durchführung meist mit einigem Aufwand verbunden ist, überflüssig macht. Veränderungen der Leerresonanz müssen bei dem erfindungsgemäßen Verfahren nicht detektiert werden.

Im erfindungsgemäßen Verfahrens sind die portionierten Einheiten dauerhaft innerhalb des Trägermaterials angeordnet. Die portionierten Einheiten werden mit Hilfe des Trägermaterials durch den Messbereich transportiert. Bei dem erfindungsgemäßen Verfahren entfällt somit ein zusätzliches Förderband oder eine rotierende Scheibe, um die portionierten Einheiten dem Messbereich zuzuführen, wie es beispielsweise in EP 1 467 191 A1 vorgesehen ist. Vielmehr erfolgt der Transport der portionierten Einheiten gemeinsam mit dem Trägermaterial, wobei die portionierten Einheiten dauerhaft in dem Trägermaterial verbleiben und nur unter Zerstörung des Trägermaterials von diesem getrennt werden können.

Bevorzugt wird das Trägermaterial dem Messbereich kontinuierlich zugeführt. Ein besonderer Vorteil des erfindungsgemäßen Verfahrens liegt darin, dass dem Messbereich auch Trägermaterial, das die portionierten Einheiten enthält, kontinuierlich zugeführt werden kann, so dass das erfindungsgemäße Verfahren unter Zusammenwirken mit einer Verpackungs- oder Füllmaschine durchgeführt werden kann.

Der Zigarettenfilterstrang ist mit Kapseln dotiert. Solche Kapseln können von dem Mikrowellenresonator dahingehend gemessen werden, ob sie eine vorgesehene Masse aufweisen, die innerhalb eines Toleranzbereichs liegt. Auch kann durch Auswertung des Feuchtewerts festgestellt werden, ob die in den Filterstrang eingebrachte Kapsel intakt ist. In diesem Fall ist die Position für die Trägermaterial-Referenzmessung durch solche Filterstrangstücke zwischen zwei Kapseln gegeben, bei denen die jeweils benachbarten Kapseln sich beide außerhalb des Messfeldes befinden.

In einer bevorzugten Weiterführung des erfindungsgemäßen Verfahrens kann die Auswerteeinheit auch die Masse der im Filterstab gemessenen Kapseln gemeinsam mit dem Zeitpunkt, zu dem die Kapsel sich im Messbereich befand, auswerten. Hierdurch kann festgestellt werden, ob die gemessenen Kapseln mit der vorgesehenen Masse einen vorbestimmten Abstand innerhalb des Zigarettenfilterstrangs besitzen. Bei dem Dotieren eines Zigarettenfilterstrangs mit Kapseln ist diese Information zusätzlich wichtig, da der Zigarettenfilterstrang später in einzelne Filter zerschnitten wird.

Erfindungsgemäß wird die Aufgabe ebenfalls durch eine Vorrichtung mit den Merkmalen gemäß Anspruch 4 gelöst.

Die erfindungsgemäße Vorrichtung dient zur Messung der Feuchte bei einer Vielzahl von portionierten Einheiten in einem nicht metallischen Trägermaterial. Die Vorrichtung weist ein Mikrowellenmessgerät, eine Fördereinrichtung, eine Messeinrichtung, eine Auswerteeinrichtung auf. Das Mikrowellenmessgerät besteht aus mindestens einem Mikrowellenresonator zur Erzeugung von mindestens einer Resonanzmode in einem örtlich begrenzten Messbereich. Die Auswerteeinheit wertet mindestens eine Größe mindestens einer Resonanzmode aus. Dabei ist es so, dass wenn mit nur einer Resonanzmode gearbeitet wird, mindestens zwei Größen der einen Resonanzmode ausgewertet werden, während bei einer Ausgestaltung mit mehreren Resonanzmoden für jede der Resonanzmoden ein oder mehrere Größen ausgewählt werden kann. Die Transporteinrichtung transportiert das nicht metallische Trägermaterial mit den portionierten Einheiten durch den Messbereich des mindestens einen Mirkowellenresonators.

Jede erfindungsgemäß vorgesehene Messeinrichtung misst mindestens zwei Größen der mindestens einen Resonanzmode jeweils, wenn nur das Trägermaterial ohne portionierte Einheit sich in dem Messbereich befindet und wenn die portionierte Einheit sich mindestens teilweise in dem Messbereich befindet. Die Einheit weist Subtraktionsmittel und einen Kennfeldspeicher auf. Das Subtraktionsmittel subtrahiert die für das Trägermaterial gemessenen Größen von den Messwerten für die portionierte Einheit. Der Kennfeldspeicher besitzt ein vorbestimmtes Kennfeld, das für die von der Subtraktion gebildeten Differenzen einen Wert für die Feuchte der portionierten Einheit angibt. Erfindungsgemäß ist als Trägermaterial ein Zigarettenfilterstrang vorgesehen, der mit Kapseln dotiert ist.

In der erfindungsgemäßen Vorrichtung können die Eigenschaften der portionierten Einheiten zuverlässig erfasst werden, wobei zugleich Schwankungen in der Dichte des Trägermaterials, Temperaturänderungen und andere Einflüsse, die bei der Messung auftreten können, kompensiert werden können.

In einer bevorzugten Ausgestaltung ist ein Fördermittel vorgesehen, das der Auswerteeinheit anzeigt, dass sich nur Trägermaterial im Messbereich befindet. Hierdurch können die Messwerte, die nur für das Trägermaterial aufgezeichnet wurden, zuverlässig von den Messwerten für die portionierte Einheit unterschieden werden.

Erfindungsgemäß ist als ein Trägermaterial ein Zigarettenfilterstrang mit Kapseln vorgesehen, beispielsweise mit Mentholkapseln. Bei der Messung eines mit Kapseln dotierten Zigarettenfilterstrangs, kann die Auswerteeinheit zusätzlich die Masse der im Zigarettenfilterstrange enthaltenen Kapseln gemeinsam mit deren Position auswerten, um festzustelten, ob die Kapseln mit der vorgesehenen Masse einen vorbestimmten Abstand und/oder eine vorbestimmte Position in dem Zigarettenfilterstrang aufweisen.

Das erfindungsgemäße Verfahren wird nachfolgend näher erläutert.

Es zeigen:

Fig. 1 die Messung von portionierten Massen in Packmaschinen sowie eine Mikrowellenanordnung zur Masse- und Feuchtemessung,

Fig. 2 die Messsignale A und B in einer Frequenzdarstellung bei Verwendung eines Mikrowellenresonators im Produktmaximum und zwischen zwei Produkt-Maxima, wenn nur das Trägermaterial sich im Messfeld befindet. Dabei ist A=Abs[f(Max)-f(Min)] und B=b(Max)-b(Min), wobei f die Resonanzfrequenz und b die Resonanzbreite bei der halben Amplitude bedeuten und die Angabe Max und Min auf das Maximum bzw. das Minimum der Werte hinweist,

Fig. 3 die Messsignale A und B in einer Frequenzdarstellung bei Verwendung eines Mikrowellenresonators und zwei genügend weit voneinander beabstandeter Resonanzmoden, wobei bei jeder Mode die Lage der Resonanzfrequenz f1 mit Portion im Messfeld, und ohne Portion im Messfeld f0 (nur mit Trägermaterial) dargestellt ist. Dabei ist A=Abs[f11-f01] und B=Abs[f12-f02], wobei f01 die erste Resonanzfrequenz und f02 die zweite Resonanzfrequenz ohne Protion und f11 die erste Resonanzfrequenz und f12 die zweite Resonanzfrequenz mit Protion im Messfeld bezeichnen.

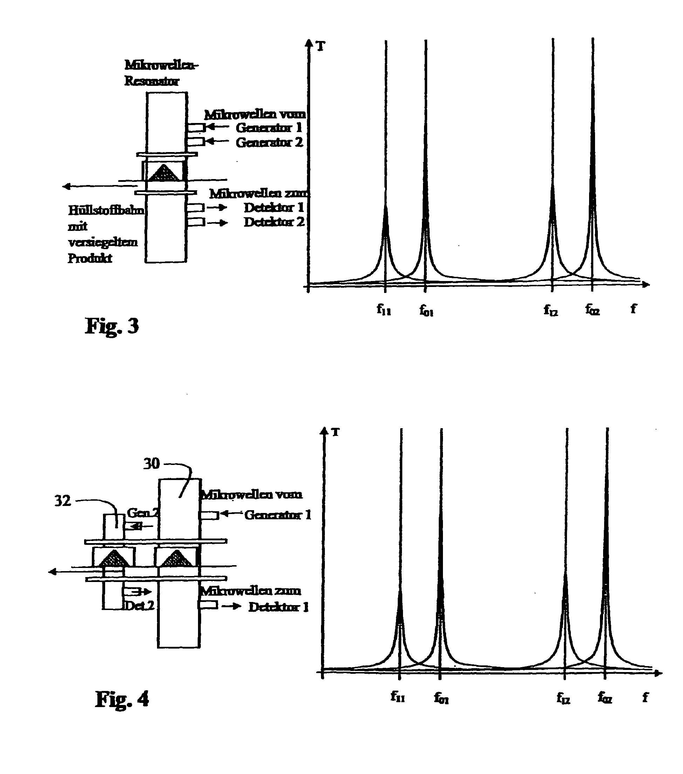

Fig. 4 die Messsignale A und B in einer Frequenzdarstellung bei Verwendung von zwei hintereinander angeordneten Mikrowellenresonatoren in der Grundmode, deren Resonanzfrequenzen weit genug auseinander liegen. Dabei kennzeichnet bei jedem Resonator f1 die Lage der Resonanzfrequenz mit Portion im Messfeld, und f0 die ohne Portion im Messfeld (nur mit Trägerbahn). Da sich die Trägerbahn mit den portionierten Einheiten hintereinander durch die 2 Resonatoren bewegt, fallen die entsprechenden Messwerte in Resonator 2 zeitlich verzögert an. Unter Berücksichtigung dieser Verschiebung ergibt sich A=Abs[fl 1-f01] und B=Abs[f12-f02].

Fig. 5 den zeitlichen Verlauf der Mikrowellenmesswerte eines Resonators beim Prozess der Bewegung einer Kette von Snus-Portionen in einer Hüllstoffbahn durch einen Mikrowellenresonator,

Fig. 6 die aufgezeichneten Messwerte für zwei Gruppen von Snus-Portionen mit unterschiedlicher Feuchte, bei denen die B-Werte über den entsprechenden A-Werten aufgetragen werden.

Fig. 7 die Messwerte in einer Ortsdarstellung bei einer Hochgeschwindigkeit-Detektion für die Position von Mentholkapseln, eingebettet in Filterstrangmaterial, und

Fig. 8 die Messwerte in einer Ortsdarstellung bei Hochgeschwindigkeit-Detektion einer Masse und der Position von Aktivkohle-Kammern in Filterstäben, eingebettet in eine Papierbahnhülse und Filterstabmaterial.

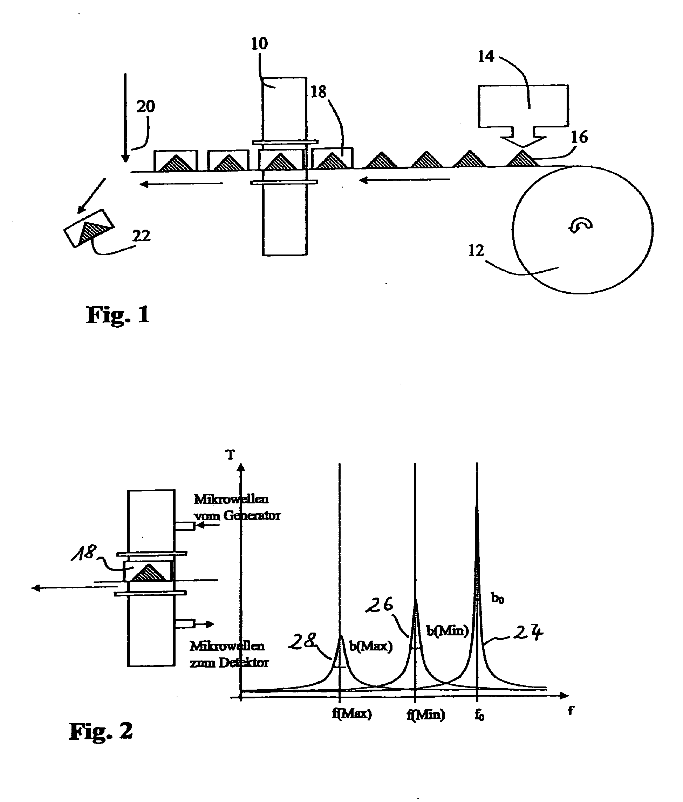

Fign. 1, 5, 6, 7 und 8 betreffen Beispiele, die nicht unter die Patentansprüche fallen. Fig. 1 zeigt in einer schematischen Ansicht einen Mikrowellenresonator 10, der innerhalb einer Produktionsmaschine mit quasi endlosen portionierten Hüllstoffbahnen als Trägerbahn angeordnet ist. Von einem Hüllstoffbahn-Reservoir 12 ausgehend wird die Hüllstoffbahn abgewickelt und über eine Portioniereinrichtung 14 mit den entsprechenden portionierten Einheiten 16 eines Materials versehen. Hierbei kann es sich um Tabak, Tee oder sonstige Stoffe handeln. In Schritt 18 werden die auf der Hüllstoffbahn vorhandenen portionierten Einheiten durch Versiegeln der Hüllstoffbahn fixiert. So können verschiedene aus dem Stand der Technik bekannte Verfahren eingesetzt werden. Die verschlossenen Positionen werden dann durch den Messbereich des Mikrowellenresonators 10 geführt. In einem nachfolgenden Schritt 20 können einzelne portionierte Einheiten 22, deren Masse oder Feuchte nicht innerhalb eines vorbestimmten Toleranzbereichs liegen, aussortiert werden. Das Trägerbahnmaterial ist also Teil des produzierten Produktes. Während sich seine Eigenschaften verändern können, interessiert für die Beurteilung der Qualität des Produktes nur die Masse (bzw. Dichte) und/oder die Feuchte der in die Trägerbahn eingebetteten Portionen.

Der Mikrowellenresonator 10 dient dazu, ein ortsfest stehendes Mikrowellenfeld zu erzeugen, durch das das gemessene Produkt samt Trägerbahn hindurchbewegt wird. Dazu hat ein Mikrowellenresonator, wenn er als Hohlraumresonator ausgebildet ist, eine Durchgangsöffnung, die häufig mit nicht-metallischem Material zur Probenführung ausgekleidet ist.

Bei der Messung werden mindestens zwei Messgrößen benötigt, wobei mit einem Mikrowellenresonator mindestens eine Messgröße für jede Resonanzmode anfällt, die sich mit dem im Feld befindlichen Material ständig ändert. Eine der Messgrößen ist die aktuelle Resonanzfrequenz. Diese Messgröße ist von der Resonatorbauform, von der Masse und der chemischen Zusammensetzung, insbesondere von der Feuchte des Produkts im Messfeld, abhängig. Es ist bei einer Masseermittlung von Vorteil, wenn die Resonanzfrequenz bei einer Resonanzmode gemessen wird, bei der quer zur Bewegungsrichtung der Probe das elektrische Messfeld der ortsfesten Welle konstant ist. Das ist beispielsweise bei der Grundmode der Resonanz der Fall, die immer in der Resonatorachse ein Maximum des Feldes aufweist, das sich quer zur Bewegung räumlich nur wenig ändert.

Wenn die portionierten Einheiten durch den Mikrowellenresonator bewegt werden, ergibt sich die Resonanzfrequenz f(V), die im Bereich des Trägermaterials mit der portionierten Einheit gemessen wird, und die Resonanzfrequenz f(Ref), die als Resonanzfrequenz zwischen den portionierten Einheiten auf dem Trägermaterial gemessen wird. Bei dem erfindungsgemäßen Verfahren erfolgt die Auswertung für die Position durch die Mess-Größe (wobei der Absolutwert der Differenz verwendet wird, da mit Portion die Resonanzfrequenz in der Regel kleiner als ohne Portion ist):

$$A\ (Port) = Abs[f(V) - f(Ref)].$$

Eine zweite Messgröße des Mikrowellenmessgeräts wird mit B bezeichnet. Grundsätzlich gibt es für die zweite Messgröße die Möglichkeit, die Breite derselben Resonanzkurve als Ausdruck der Dämpfung der Mikrowelle durch den Resonator selbst, wie durch das Trägermaterial und die eingebettete Portion darzustellen. Dieser Ansatz zur Bestimmung der Größe B wird im Kontext der Fig. 2 näher erläutert. Die Figur 2 zeigt zur Veranschaulichung den Verlauf der Resonanzkurve 24 im leeren Zustand des Mikrowellenresonators mit der Frequenz f0 und der Breite b0, die aber bei der gesamten Messung nicht beachtet werden. Ferner sind beispielhaft zwei Resonanzkurven eingezeichnet, die sich hiervon unterscheiden, wobei die Resonanzkurven 26 und 28 kleinere Resonanzfrequenzen als die Resonanzkurve im leeren Zustand besitzen. Die Resonanzkurve 26 mit der Breite b(Min) kennzeichnet den Zustand, in dem sich nur das Trägermaterial im Messfeld des Resonators befindet, während die Resonanzkurve 28 mit der Breite b(Max) den Zustand beschreibt, bei dem sich Trägermaterial und portionierte Einheit im Messfeld befinden. Für die Auswertung des in Fig. 2 gezeigten Beispiels, bei dem sich die verpackte Portion 18 vollständig im Inneren des Mikrowellenresonators befindet, kann zur Auswertung auf die maximale Breite der Resonanzkurve 28 abgestellt werden.

Allgemein gilt: Wenn die portionierten Einheiten durch das Mirkowellenmessgerät bewegt werden, ergibt sich die Resonanzbreite b(V), die im Bereich des Trägermaterials mit der portionierten Einheit gemessen wird, und Resonanzbreite b(Ref), die zwischen den portionierten Einheiten auf dem Trägermaterial gemessen wird. Bei dem erfindungsgemäßen Verfahren erfolgt die Auswertung für die Portion durch die Größe:

$$B(Port) = b(V) - b(Ref).$$

Zwei alternative Möglichkeiten zur Bestimmung der zweiten Messgröße B(Port) sind im Zusammenhang mit den Fign. 3 und 4 dargestellt. Fig. 3 zeigt ein Beispiel, bei dem als zweite Messgröße B(Port) die Verstimmung einer anderen Resonanzmode mit portionierter Einheit gegenüber der Resonanz nur mit Trägermaterial, erfasst wird. Bei einer gegenüber der Grundmode angeregten Resonanzfrequenz, die weit genug von der Grundmode-Resonanz entfernt liegt, beispielsweise mindestens 0,5 GHz, besser 3 - 4 GHz, treten die in der Fig. 3 dargestellten Verschiebungen der Resonanzen auf. Für die erste Resonanzfrequenz ergibt sich im Zustand, bei dem sich nur das Trägermaterial im Messfeld befindet, die Resonanzfrequenz f01, die sich durch Einbringen der in das Trägermaterial eingebetteten portionierten Einheit in den Mikrowellenresonator zu der zweiten Resonanzfrequenz f11 verschiebt. Für die zweite vom Mikrowellenresonator eingespeiste Resonanz ergibt sich im Zustand nur mit Trägermaterial eine Frequenz f02 und im Zustand Trägermaterial plus portionierte Einheit des Mikrowellenresonators eine Resonanzfrequenz von f12. Das vorstehende Verfahren nutzt die Frequenzabhängigkeit der Dielektrizitätskonstanten aus und benötigt daher Resonanzfrequenzen, die nach Möglichkeit einen großen Abstand besitzen. Bei dieser Art der Auswertung werden somit keinerlei Dämpfungseffekte des Materials, die sich in der Verbreiterung der Resonanz niederschlagen, ausgewertet. Das kann immer dann große Vorteile bringen, wenn die Dämpfungsmessung für eine präzise Feuchte- und Massemessung der portionierten Einheiten keine eindeutigen Messeffekt liefert, z.B. wenn die Dämpfungs-basierte Kalibrationskurve über der Feuchte-Achse zu flach verläuft. Dann hilft meist der Übergang zur Messtechnik ohne Dämpfungsmessung:

$$A(Port)= Abs[f11 - f01]$$

$$B(Port)= Abs[f12 - f02].$$

Die auf diese Weise aufgezeichnete Verstimmung B dient dazu, bei dem aufgezeichneten Messwert A die Feuchteabhängigkeit zu kompensieren.

Bei der in Fig. 4 dargestellten Variante wird ein erster Resonator 30 und ein zweiter Resonator 32 eingesetzt. Beide Resonatoren werden in der Grundmode von zylindrischen Hohlräumen bei genügend weit voneinander entfernten Resonanzen betrieben - beispielsweise mindestens 0,5 GHz, besser 3 - 4 GHz. Auch bei diesen zwei Mikrowellenresonatoren können wieder die Verschiebungen der Resonanzfrequenzen ausgewertet werden, allerdings von zwei unterschiedlichen, in der Grundmode betriebenen, Resonatoren.

Damit hat man die Möglichkeit, eine Grundmode, mit quer zur Portionenbewegung relativ konstantem Messfeld, die sonst bei einem Resonator nur bei einer Frequenz vorkommt, bei weit auseinanderliegenden Frequenzen für die Messung einzusetzen - was insbesondere bei der Feuchtemessung in inhomogenen Proben, bzw. über die Feuchtekompensation auch in der Massemessung zu einer Steigerung der Messpräzision führt. Dabei kennzeichnet bei jedem Resonator f1 die Lage der Resonanzfrequenz mit portionierter Einheit im Messfeld, und f0 die Resonanzfrequenz nur mit Trägerbahn im Messfeld. Da sich die Trägerbahn mit den portionierten Einheiten hintereinander durch die 2 Resonatoren bewegt, fallen die entsprechenden Messwerte in Resonator 2 zeitlich verzögert an. Unter Berücksichtigung dieser Verschiebung ergeben sich die zwei unabhängigen Messgrößen (wieder unter Verwendung der Absolutbeträge, da die Resonanzfrequenz mit Portion in der Regel kleiner als ohne Portion ist):

$$A(Port)=Abs[f11-f01]$$

$$B(Port)=Abs[f12-f02].$$

Prinzipiell sind die in den Figuren 1 bis 4 mit unterschiedlichen Methoden erfassten Größen A(Port) und B(Port), die die Eigenschaften von in einem Trägermaterial enthaltenen portionierten Einheiten definieren, zur Masse der portionierte Einheiten proportional, aber in unterschiedlicher Art von der chemischen Zusammensetzung, insbesondere von Produkten mit kleinen, polaren Molekülen, wie der Feuchte oder des Alkoholgehaltes, abhängig. In manchen Fällen ist die strenge Masseproportionalität nur durch das Addieren einer kleinen Offset-Konstanten zu erreichen. Dann ergibt sich durch Bildung des Quotienten aus B(Port) und A(Port) ein von der Masse unabhängiger Wert für die chemische Zusammensetzung des Portionen-Materials, insbesondere für die in Masseprozenten angegebene Feuchte der portionierten Einheiten. Dieser masseunabhängige Quotient kann gegen ein Referenz-Verfahren kalibriert werden und als Kalibrationsbeziehung für die Feuchte der Portionen in einer Kennlinie abgespeichert werden.

Darüber hinaus bietet die Messung mit den zwei Parametern A(Port) und B(Port) der portionierten Einheiten auch die Möglichkeit, die Masse (oder bei konstante Probengeometrie die Dichte des Produktes), unabhängig von Schwankungen in der chemischen Zusammensetzung, insbesondere der Feuchte anzugeben, indem die Messsignale B(Port) und A(Port) als Linearkombination gegen die Referenzmasse (oder Dichte) der Portion kalibriert werden. Die Koeffizienten dieser Linearkombination können dann als Parameter der Kalibrationsbeziehung für die Masse bzw. Dichte des jeweiligen Portionen-Materials in einer Kennlinie abgespeichert werden.

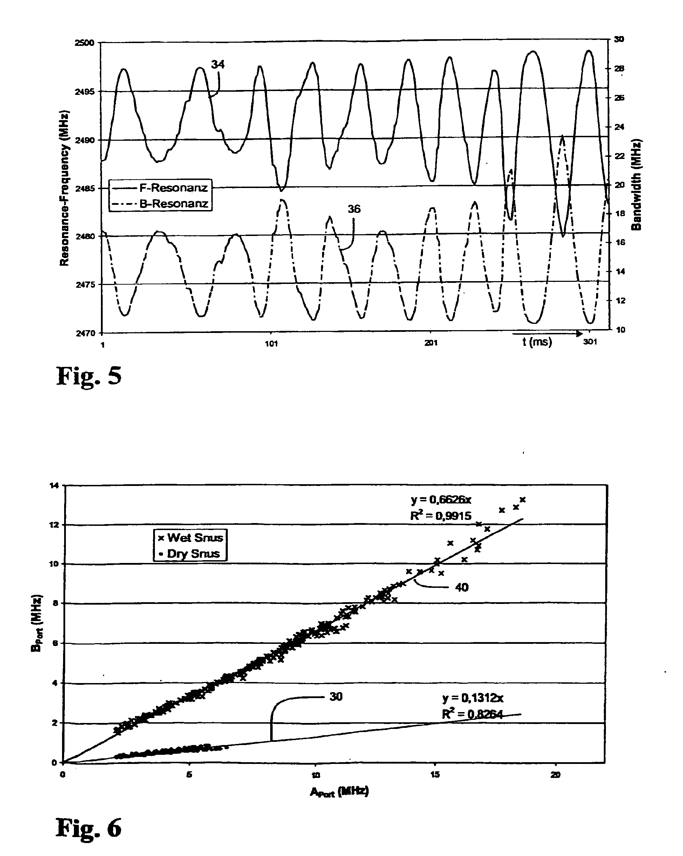

Der zeitliche Verlauf der so aufgezeichneten Messgrößen für die Resonanzfrequenz und Linienbreite einer Resonanzmode ist in Fig. 5 beispielhaft dargestellt, wenn sich ein Trägermaterial aus Zellstoff mit Tabakpulver-Portionen durch das Messfeld eines Mikrowellenresonators bewegt. Deutlich ist in Fig. 5 zu erkennen, dass der Verlauf beider Werte über der Zeit t aufgetragen, eine periodische Struktur aufweist. Zwar variieren die Amplitudenwerte und kleinere überlagerte Schwankungen in den Messwerten selbst. Der über die Zeit aufgetragene Lauf beider Messgrößen besitzt jedoch die gleiche Periode, die durch die Bewegung der periodisch im Trägermaterial angeordneten portionierten Einheiten verursacht wird. Die Messwerte, bei denen die Resonanzfrequenz ein Maximum und die Breite ein Minimum aufweist, können als Referenzgrößen für das reine Trägermaterial, den leeren Resonator und eventuelle Resonatorverschmutzungen betrachtet werden. Andererseits werden die Minima der Resonanzfrequenz und Maxima der Halbwertsbreite durch die portionierten Einheiten plus Trägermaterial hervorgerufen. Die Differenz von Gesamt- und Referenzsignal ergibt dann die für die portionierten Einheiten kennzeichnenden Messgrößen A(Port) und B(Port)

Diese Messgrößen A(Port) und B(Port) sind dabei unabhängig von Verschmutzungen, Abschürfungen des Resonators, Temperaturveränderungen oder sonstigen Eigenschaftsveränderungen im Resonator. Wegen der Masseproportionalität der beiden Größen A(Port) und B(Port) ist während der Bewegung einer Portion eines Produkts ein An- und Absteigen der beiden Messsignale zu beobachten. Dies ist für den Fall der bewegten portionierten Einheiten 18 aus Fig. 1 in Fig. 5 an den auftretenden Maxima und Minima zu erkennen.

Fig. 6 zeigt die Messwerte von Tabakportionen aus Fig. 5 in der Form einer Auftragung von B(Port) - über A(Port) -Messwerten bei der Bewegung der portionierten Einheiten 18 durch das Mikrowellenmessgerät 10, wobei bei der Messung zwei Proben mit stark unterschiedlichen Feuchten verwendet wurden. In dem in Fig. 6 dargestellten Beispiel sind die wegen der Masseproportionalität von B(Port) und A(Port) durch den Ursprung führenden Regressionsgeraden 38 und 40 eingezeichnet, deren Steigung ein Maß für die Feuchte der portionierten Einheiten ist und durch eine Kalibrations-Kennlinie ausgewertet werden kann. Im Falle, dass die Ausdehnung der portionierten Einheiten kleiner als das Messfeld sind, genügt es in Fig. 6 in der Auswertung der Signale gemäß Fig. 5 auf die Maximalwerte für die

A- und B-Werte abzustellen. Ist dagegen die Ausdehung der Probe größer als das Messfeld des Resonators in der Bewegungsrichtung, dann ist zur Kennzeichnung der portionierten Einheiten die Bildung des Mittelwertes zwischen zwei benachbarten Referenz-Messstellen von Vorteil. Zur Bestimmung der Referenzgrößen für das Trägermaterial ohne portionierte Einheiten kann beispielsweise auf das Maximum bzw. Minimum der Kurven 34 und 36 abgestellt werden. Alternativ ist es auch denkbar, dass der Auswerteeinheit ein separates Steuersignal vorliegt, das anzeigt, ob sich gerade eine Portion oder nur das Trägermaterial in dem Messbereich befindet.

In der praktischen Verwendung können durch das Mikrowellenmessgerät bis zu 20.000 A-, B-Messwerte pro Sekunde aufgezeichnet werden. Bewegt sich eine Portion mit einer Geschwindigkeit von 10 m/s durch den Sensor, dann können bei einer Messfeldausdehnung und Probengröße von jeweils 1 cm bis zu 20 A(Port)und B(Port) -Werte für die zu messende Portion bestimmt werden. Dies bildet ungefähr die obere Grenze für die Geschwindigkeit bzw. die untere Grenze für die Probengröße, bis zu der mit den heute technisch verfügbaren Messtechniken im Mikrowellenbereich gearbeitet werden kann. Bei realistischen, üblich ProduktionsGeschwindigkeiten von 1 m/sec erhöht sich die Zahl der Messwerte pro Probenzentimeter bereits auf 200, wodurch auch Proben vermessen werden können, die deutlich kleiner als 1 cm sind.

Bezieht man A und B immer auf die Referenzmessung, dann ist die Anwesenheit einer portionierten Einheit immer durch ein Überschreiten eines Maximums gekennzeichnet, sowohl bei A wie bei B.

Ist die Größe der gemessenen Portion kleiner als der sich in Transportrichtung erstreckende homogene Feldbereich des Mikrowellenresonators, befindet sich bei Erreichen des maximalen Signals für A die gesamte Probe im Messbereich. In diesem Fall kann wie bereits angesprochen, auf das Maximum der Messgröße A abgestellt werden. Das zeitliche Verhalten bei B ist analog.

Ist der Messbereich gar nicht oder nur ungenügend homogen in Achsrichtung, dann übersteigt die Größe der gemessenen Portion die Ausdehnung des homogenen Feldbereichs, der als Messbereich dient. In diesem Fall hat sich als wesentlich präziser herausgestellt, statt des Maximalwerts auf den Mittelwert über den Verlauf von A(Port) und B(Port) abzustellen. Der Mittelwert kann beispielsweise zwischen zwei Minima gebildet werden.

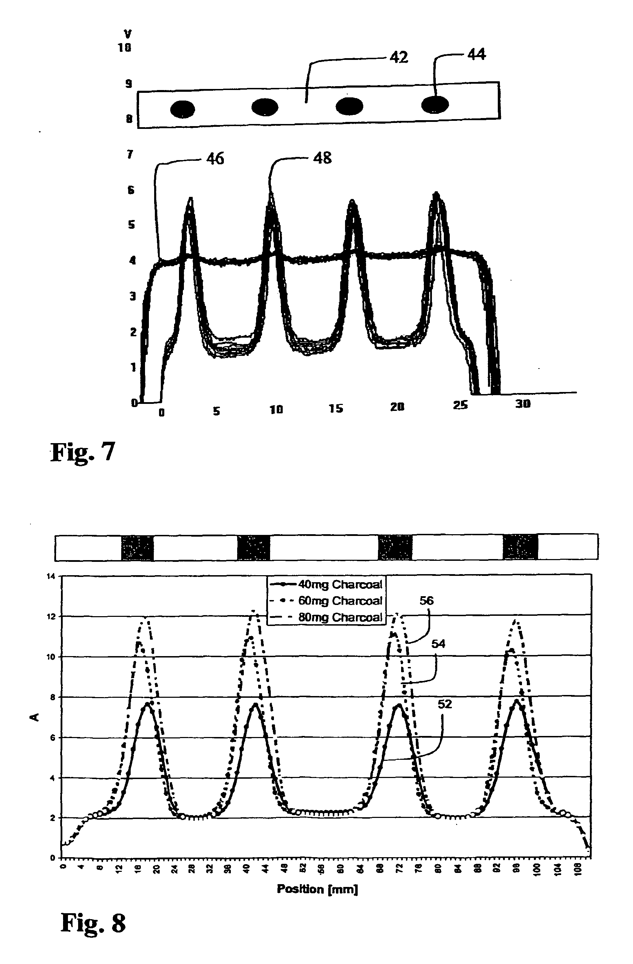

Fig. 7 zeigt den Einsatz eines weiteren Verfahrens bei einem Filterstab 42, in den mit Menthol gefüllte Kapseln 44 eingearbeitet sind, wobei ein Einresonanzverfahren unter Auswertung der Resonanzfrequenz und der Breite der Resonanzkurve angewendet wird. Die über die Länge des Filterstabs 42 erzeugten B-Werte sind dabei im Wesentlichen konstant, solange die Kapseln 44 in dem Filterstab intakt sind. Die ebenfalls dargestellten A-Werte 48 besitzen ein Maximum in den jeweiligen Positionen der Kapseln 44. Sind die Kapseln hingegen nicht intakt, zeigen auch die B-Werte ein lokales Maximum. Durch Auswertung der A- und B-Werte ist es möglich, an dem Filterstab zu prüfen, ob die Kapseln in dem Filterstab 42 intakt und vollzählig sind und sich an der richtigen Position des Filterstabes befinden.

In Fig. 7 werden die aufgetragenen Messwerte direkt in eine Position der Kapseln in Millimeter umgerechnet. Zur Auswertung der Frage, ob die Kapseln 44 im vorgesehenen Abstand zueinander im Filterstrang 42 positioniert werden, kann beispielsweise der Abstand zwischen den Maxima 48 ausgewertet werden.

Fig. 8 erörtert das erfindungsgemäße Verfahren beispielsweise beim Einsatz für einen Quasi-Endlosfilterstrang an einer Multifilterstabmaschine. Die Werte 52 zeigen den Filterstrang mit einem gefüllten Multifilter, wobei sich 40 mg Aktivkohle in der Filterkammer befinden. Der Verlauf der Kurve 54 zeigt eine etwas stärker gefüllte Filterkammer, in der 60 mg Aktivkohle enthalten ist. Kurve 56 zeigt den Verlauf der Resonanzfrequenzen in einem Filterstrang mit ca. 70 mg Aktivkohle pro Kammer. Die Differenz zwischen den Resonanzfrequenzen mit Portion plus Trägermaterial und den Frequenzen an den Referenzstellen ergeben A(Port), welches ein ideales Maß für den Aktivkohlegehalt in jeder einzelnen Kammer ist.

**Patentansprüche**

1. Verfahren zur Messung der Feuchte bei einer Vielzahl von portionierten Einheiten in einem nichtmetallischen Trägermaterial, das Folgendes vorsieht:

   - ein Mikrowellenmessgerät bestehend aus mindestens einem Mikrowellenresonator zur Erzeugung mindestens einer Resonanzmode in einem örtlich begrenzten Messbereich und einer Auswerteeinheit zur Auswertung von mindestens einer Größe der mindestens einen Resonanzmode,
   - eine Fördereinrichtung für das Trägermaterial, die das Trägermaterial mit den portionierten Einheiten durch den Messbereich transportiert,
   - das Mikrowellenmessgerät misst mindestens zwei Größen jeweils, wenn nur das Trägermaterial ohne portionierte Einheit sich in dem Messbereich befindet und wenn die portionierte Einheit sich mindestens teilweise in dem Messbereich befindet, wobei im Fall einer Resonanzmode für diese zwei Größen und im Fall mehrerer Resonanzmoden jeweils eine oder mehrere Größen gemessen werden,
- die Auswerteeinheit subtrahiert die für das Trägermaterial gemessenen Größen von den Messwerten für die portionierte Einheit und bestimmt aus mindestens zwei Differenzen über ein Kennfeld einen Wert für die Feuchte der portionierten Einheit, wobei als Trägermaterial dem Mikrowellenmessgerät ein mit Kapseln dotierter Zigarettenfilterstrang zugeführt wird.

2. Verfahren nach Anspruch 1, **dadurch gekennzeichnet, dass** die Messwerte für das Trägermaterial gewonnen werden, wenn ein Maximum in der Resonanzfrequenz und ein Minimum der Linienbreite auftritt.

3. Verfahren nach Anspruch 1, **dadurch gekennzeichnet, dass** die Auswerteeinheit zusätzlich aus mindestens zwei Differenzen über das Kennfeld einen Wert für eine Masse der portionierten Einheit bestimmt und die Auswerteeinheit die Masse der im Zigarettenfilterstab gemessenen Kapseln gemeinsam mit dem Zeitpunkt, zu dem die Kapsel sich im Messbereich befand, auswertet, um festzustellen, ob die Kapseln mit der vorgesehenen Masse einen vorbestimmten Abstand und/oder eine vorbestimmte Position in dem Zigarettenfilterstab aufweisen.

4. Vorrichtung zur Messung der Feuchte bei einer Vielzahl von portionierten Einheiten in einem nichtmetallischen Trägermaterial, die Folgendes aufweist:

    - ein Mikrowellenmessgerät bestehend aus mindestens einem Mikrowellenresonator zur Erzeugung mindestens einer Resonanzmode in einem örtlich begrenzten Messbereich und einer Auswerteeinheit zur Auswertung von mindestens einer Größe der mindestens einen Resonanzmode,
    - eine Fördereinrichtung für das Trägermaterial, die das Trägermaterial mit den portionierten Einheiten durch den Messbereich transportiert,
    - eine Messeinrichtung, die mindestens zwei Größen misst, jeweils, wenn nur das Trägermaterial ohne portionierte Einheit sich in dem Messbereich befindet und wenn die portionierte Einheit sich mindestens teilweise in dem Messbereich befindet, wobei im Fall einer Resonanzmode für diese zwei Größen und im Fall mehrerer Resonanzmoden jeweils eine oder mehrere Größen gemessen werden,
    - die Auswerteeinheit weist Subtraktionsmittel, die die für das Trägermaterial gemessene Größe von den Messwerten für die portionierte Einheit subtrahiert, und einen Kennfeldspeicher auf, in dem ein vorbestimmtes Kennfeld abgelegt ist, das für die von den Subtraktionsmitteln gebildeten Differenzen einen Wert für die Feuchte der portionierten Einheit angibt, wobei als Trägermaterial ein mit Kapseln dotierter Zigarettenfilterstrang vorgesehen ist.

5. Vorrichtung nach Anspruch 4, **dadurch gekennzeichnet, dass** die Fördereinrichtung der Auswerteeinheit anzeigt, wenn nur Trägermaterial sich im Messbereich befindet.

6. Vorrichtung nach Anspruch 4, **dadurch gekennzeichnet, dass** das vorbestimmte Kennfeld in dem Kennfeldspeicher für die von den Subtraktionsmitteln gebildeten Differenzen einen Wert für die Masse der portionierten Einheit angibt und die Auswerteeinheit die Masse der im Zigarettenfilterstrang gemessenen Kapseln gemeinsam mit dem Zeitpunkt, zu dem die Kapsel sich im Messbereich befand, auswertet, um Fest zustellen ob die Kapseln mit der vorgesehenen Masse einen vorbestimmten Abstand und/oder eine vorbestimmte Position in dem Zigarettenfilterstrang aufweisen.

## Claims

1. Method for the measurement of the humidity in a plurality of portioned units in a non-metallic carrier material, which provides the following:

    • a microwave measuring instrument, consisting of at least one microwave resonator for generating at least one resonance mode in a spatially limited measurement area and an analysing unit for analysing at least one variable of the at least one resonance mode,
    • a conveying device for the carrier material, which transports the carrier material with the portioned units through the measurement area,
    • the microwave measuring instrument measures at least two variables at a time when only the carrier material without portioned unit is in the measurement area, and when the portioned unit is at least partially in the measurement area, wherein in the case of a resonance mode for these two variables and in the case of several resonance modes respectively one or more variables are measured,
    • the analysing unit subtracts the variable measured for the carrier material from the measurement values for the portioned unit, and determines a value of the humidity of the portioned unit from at least two differences via an input-output map, wherein as carrier material a cigarette filter strand that is doped with capsules is supplied to the microwave measurement instrument.

2. A method according to claim 1, **characterised in that** the measurement values for the carrier material are established when a maximum in the resonance frequency and a minimum of the line width occurs.

3. A method according to claim 1, **characterised in that** the analysing unit determines a value for a mass of the portioned unit additionally from at least two differences via the input-output map and the analysing unit analyses the mass of the capsules measured in the cigarette filter rod together with the point of time at which the capsule was in the measurement area, in order to locate whether the capsules having the desired mass do have a predetermined distance, and/or a predetermined position in the cigarette filter rod.

4. An apparatus for the measurement of the humidity in a plurality of portioned units in a non-metallic carrier material, which features the following:

   • a microwave measuring instrument, consisting of at least one microwave resonator for generating at least one resonance mode in a spatially limited measurement area and an analysing unit for analysing at least one variable of the at least one resonance mode,
   • a conveying device for the carrier material, which transports the carrier material with the portioned units through the measurement area,
   • a measurement device that measures at least two variables at a time when only the carrier material without portioned unit is in the measurement area, and when the portioned unit is at least partially in the measurement area, wherein in the case of a resonance mode for these two variables and in case of several resonance modes respectively one or more variables are measured,
   • the analysing unit features subtraction means which subtract the variable measured for the carrier material from the measurement values for the portioned unit, and an input-output memory in which a predetermined input-output map is stored which indicates a value of the humidity of the portioned unit for two differences generated by the subtraction means, wherein as carrier material a cigarette filter strand that is doped with capsules is provided.

5. An apparatus according to claim 4, **characterised in that** the conveying unit indicates to the analysing unit when there is only carrier material in the measurement area.

6. An apparatus according to claim 4, **characterised in that** the predetermined input-output map indicates a value for the mass of the portioned unit for the differences generated by the substraction means in the input-output memory and the analysing unit analyses the mass of the capsules measured in the cigarette filter strand together with the point of time at which the capsule was in the measurement area, in order to locate whether the capsules having the desired mass do have a predetermined distance, and/or a predetermined position in the cigarette filter strand.

**Revendications**

1. Procédé de mesure de l'humidité d'une pluralité d'unités pré-dosées dans un matériau de support non métallique, qui prévoit ce qui suit :

   • un dispositif de mesure à micro-ondes, consistant d'au moins un résonateur micro-ondes pour générer au moins un mode de résonance dans une zone de mesure spatialement limitée, et d'une unité d'analyse pour l'analyse d'au moins une grandeur de l'au moins un mode de résonance,
   • un dispositif de transfert pour le matériau de support qui transporte le matériau de support avec les unités pré-dosées à travers la zone de mesure,
   • le dispositif de mesure à micro-ondes mesure au moins deux grandeurs chaque fois quand seulement le matériau de support sans unité pré-dosée se trouve dans la zone de mesure, et quand l'unité pré-dosée se trouve au moins partiellement dans la zone de mesure, une ou respectivement plusieurs grandeurs étant mesurées dans le cas d'un mode de résonance pour ces deux grandeurs et dans le cas de plusieurs modes de résonance,
   • l'unité d'analyse soustrait les grandeurs mesurées pour le matériau de support des valeurs mesurées pour les unités pré-dosées et détermine une valeur pour l'humidité des unités pré-dosées à partir d'au moins deux différences via un diagramme caractéristique, un boudin de filtres de cigarette doté de capsules étant alimenté au dispositif de mesure à micro-ondes comme matériau de support.

2. Procédé selon la revendication 1, **caractérisé en ce que** les valeurs mesurées pour le matériau de support sont obtenues quand il y a un maximum dans la fréquence de résonance et un minimum dans la largeur de ligne.

3. Procédé selon la revendication 1, **caractérisé en ce**

**que** l'unité d'analyse détermine en addition une valeur pour une masse des unités pré-dosées à partir d'au moins deux différences via le diagramme caractéristique, et l'unité d'analyse analyse la masse des capsules mesurées dans la tige de filtres de cigarette conjointement avec le moment dans lequel la capsule se trouvait dans la zone de mesure, afin de détecter si les capsules avec la masse prévue ont une distance prévue et/ou une position prévue dans la tige de filtres de cigarette.

4. Dispositif de mesure de l'humidité dans une pluralité d'unités pré-dosées dans un matériau de support non métallique, qui comporte ce qui suit :

   • un dispositif de mesure à micro-ondes, consistant d'au moins un résonateur micro-ondes pour générer au moins un mode de résonance dans une zone de mesure spatialement limitée, et d'une unité d'analyse pour l'analyse d'au moins une grandeur de l'au moins un mode de résonance,
   • un dispositif de transfert pour le matériau de support qui transporte le matériau de support avec les unités pré-dosées à travers la zone de mesure,
   • un dispositif de mesure, qui mesure au moins deux grandeurs chaque fois quand seulement le matériau de support sans unité pré-dosée se trouve dans la zone de mesure, et quand l'unité pré-dosée se trouve au moins partiellement dans la zone de mesure, une ou respectivement plusieurs grandeurs étant mesurées dans le cas d'un mode de résonance pour ces deux grandeurs et dans le cas de plusieurs modes de résonance,
   • l'unité d'analyse comporte des moyens de soustraction qui soustraient la grandeur mesurée pour le matériau de support des valeurs mesurées pour l'unité pré-dosée, et une mémoire pour un diagramme caractéristique dans laquelle un diagramme caractéristique est déposé qui indique une valeur pour l'humidité des unités pré-dosées pour les différences générées par les moyens de soustraction, un boudin de filtres de cigarette doté de capsules étant prévu comme matériau de support.

5. Dispositif selon la revendication 4, **caractérisé en ce que** le dispositif de transfert indique à l'unité d'analyse quand il y a seulement du matériau de support dans la zone de mesure.

6. Dispositif selon la revendication 4, **caractérisé en ce que** le diagramme caractéristique prédéterminé dans la mémoire pour le diagramme caractéristique indique une valeur pour la masse des unités pré-dosées pour les différences générées par les moyens de soustraction, et l'unité d'analyse analyse la masse des capsules mesurées dans le boudin de filtres de cigarette conjointement avec le moment dans lequel la capsule se trouvait dans la zone de mesure, afin de détecter si les capsules avec la masse prévue ont une distance prévue et/ou une position prévue dans le boudin de filtres de cigarette.

**Fig. 1**

**Fig. 2**

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0889321 A
- EP 1316630 A
- EP 1467191 B1
- DE 10159233 A1
- EP 1467191 A1